# EUROPEAN PATENT APPLICATION

(11) **EP 4 529 062 A1**
(43) Date of publication of application: **26.03.2025**
(21) Application number: 22941942.9
(22) Date of filing: 16.05.2022
(51) Int. Cl.: H04L 5/00

(54) **INFORMATION INDICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Gunzelmann, Rainer
(86) International application number: PCT/CN2022/093160
(87) International publication number: WO 2023/220898

(57) **Abstract**

The present disclosure relates to the technical field of communications, and provides an information indication method and apparatus, a device, and a storage medium. The method comprises: a network device indicates DMRS information of a UE to the UE, wherein the DMRS information comprises at least one of the following: a DMRS mapping type, comprising a first-class DMRS mapping type and/or a second-class DMRS mapping type, the second-class DMRS mapping type being a mapping type after the first-class DMRS mapping type is enhanced from the dimension of the number of supported ports; and DMRS port information corresponding to the UE, the DMRS port information being a DMRS port of a data channel allocated to the UE from the ports supported by the DMRS mapping type. Therefore, according to the indication method provided by the present disclosure, the second-class DMRS mapping type (that is, the enhanced DMRS mapping type) and the DMRS port information of the second-class DMRS mapping type can be indicated, so that multi-TRP-related joint transmission can be supported, and deployment of multi-TRP-related joint transmission is promoted.

## Description

### TECHNICAL FIELD

The present disclosure relates to the field of communication technology, and more particularly relates to a method and an apparatus for information indication, a device and a storage medium.

### BACKGROUND

In a communication system, a coherent joint transmission (CJT) is introduced, so that a multi user-multi input multi output (MU-MIMO) system may support more user equipment (UEs) to obtain a greater system gain. An enhanced demodulation reference signal (DMRS) type is obtained by enhancing the existing DMRS type. Compared with the existing DMRS type, the enhanced DMRS type may provide more ports, so that the MU-MIMO system supports more UEs.

In the related art, a network device usually needs to indicate to the UE a DMRS type and DMRS port information of the UE. However, when the enhanced DMRS type is introduced, since the enhanced DMRS type is different from the existing DMRS type, and a number of ports supported by the enhanced DMRS type is different from a number of ports supported by the existing DMRS type, the following problems may occur:
Problem 1, the existing signaling cannot indicate the enhanced DMRS type; and
Problem 2, the existing method for indicating DMRS port information is not suitable for indicating DMRS port information for the enhanced DMRS type.

### SUMMARY

The method and apparatus for information indication, device and storage medium proposed in the present disclosure can be used to indicate the enhanced DMRS type and the DMRS port information of the enhanced DMRS type.

According to a first aspect of embodiments of the present disclosure, a method for information indication is provided, which is performed by a network device. The method includes: indicating demodulation reference signal (DMRS) information of a user equipment (UE) to the UE, in which the DMRS information includes at least one of: a DMRS type, or DMRS port information corresponding to the UE. The DMRS type includes a first category of DMRS types and/or a second category of DMRS types. The second category of DMRS types are enhanced types of the first category of DMRS types from a perspective of supporting a number of ports. The DMRS port information indicates a DMRS port of a data channel allocated to the UE among ports supported by the DMRS type.

According to a second aspect of embodiments of the present disclosure, a method for information indication is provided, which is performed by a UE. The method includes: obtaining DMRS information of the UE indicated by a network device, in which the DMRS information includes at least one of: a DMRS type, or DMRS port information corresponding to the UE; and determining the DMRS type and the DMRS port information. The DMRS type includes a first category of DMRS types and a second category of DMRS types. The second category of DMRS types are enhanced types of the first category of DMRS types from a perspective of supporting a number of ports. The DMRS port information indicates a DMRS port of a data channel allocated to the UE among ports supported by the DMRS type.

According to a third aspect of embodiments of the present disclosure, an apparatus for information indication is provided, including: an indication module configured to indicate DMRS information of a UE to the UE, in which the DMRS information includes at least one of: a DMRS type, or DMRS port information corresponding to the UE. The DMRS type includes a first category of DMRS types and a second category of DMRS types. The second category of DMRS types are enhanced types of the first category of DMRS types from a perspective of supporting a number of ports. The DMRS port information indicates a DMRS port of a data channel allocated to the UE among ports supported by the DMRS type.

According to a fourth aspect of embodiments of the present disclosure, an apparatus for information indication is provided, including: an obtaining module and a determination module. The obtaining module is configured to obtain DMRS information of the UE indicated by a network device, in which the DMRS information includes at least one of: a DMRS type, or DMRS port information corresponding to the UE. The DMRS type includes a first category of DMRS types and a second category of DMRS types. The second category of DMRS types are enhanced types of the first category of DMRS types from a perspective of supporting a number of ports. The DMRS port information indicates a DMRS port of a data channel allocated to the UE among ports supported by the DMRS type. The determination module is configured to determine the DMRS type and the DMRS port information.

According to a fifth aspect of embodiments of the present disclosure, a communication device is provided, including a processor and a memory storing a computer program. The processor is configured to execute the computer program in the memory, so as to implement the above-mentioned method in the first aspect.

According to a sixth aspect of embodiments of the present disclosure, a communication device is provided, including a processor and a memory storing a computer program. The processor is configured to execute the computer program in the memory, so as to implement the above-mentioned method in the second aspect.

According to a seventh aspect of embodiments of the present disclosure, a communication device is provided, including a processor and an interface circuit. The interface circuit is configured to receive a code instruction and transmit the code instruction to the processor, and the processor is configured to execute the code instruction so as to implement the above-mentioned method in the first aspect.

According to an eighth aspect of embodiments of the present disclosure, a communication device is provided, including a processor and an interface circuit. The interface circuit is configured to receive a code instruction and transmit the code instruction to the processor, and the processor is configured to execute the code instruction so as to implement the above-mentioned method in the second aspect.

According to a nineth aspect of embodiments of the present disclosure, a computer-readable storage medium storing an instruction is provided. The instruction is executed to implement the above-mentioned method in the first aspect.

According to a tenth aspect of embodiments of the present disclosure, a computer-readable storage medium storing an instruction is provided. The instruction is executed to implement the above-mentioned method in the second aspect.

To summarize, in the method and apparatus for information indication, the device and the storage medium according to the embodiments of the present disclosure, the network device may indicate to the UE, DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

### BRIEF DESCRIPTION OF THE DRAWINGS

The above-mentioned and/or other aspects and advantages of the present disclosure may become apparent and easily understandable in the following description in conjunction with the drawings.
FIG. 1 is a flowchart of a method for information indication according to an embodiment of the present disclosure.
FIG. 2 is a flowchart of a method for information indication according to another embodiment of the present disclosure.
FIG. 3 is a flowchart of a method for information indication according to another embodiment of the present disclosure.
FIG. 4 is a flowchart of a method for information indication according to another embodiment of the present disclosure.
FIG. 5 is a flowchart of a method for information indication according to another embodiment of the present disclosure.
FIG. 6 is a flowchart of a method for information indication according to another embodiment of the present disclosure.
FIG. 7 is a flowchart of a method for information indication according to another embodiment of the present disclosure.
FIG. 8 is a flowchart of a method for information indication according to another embodiment of the present disclosure.
FIG. 9 is a flowchart of a method for information indication according to another embodiment of the present disclosure.
FIG. 10 is a flowchart of a method for information indication according to another embodiment of the present disclosure.
FIG. 11 is a flowchart of a method for information indication according to another embodiment of the present disclosure.
FIG. 12 is a flowchart of a method for information indication according to another embodiment of the present disclosure.
FIG. 13 is a structural diagram of an apparatus for information indication according to another embodiment of the present disclosure.
FIG. 14 is a structural diagram of an apparatus for information indication according to another embodiment of the present disclosure.
FIG. 15 is a block diagram of a UE according to an embodiment of the present disclosure.
FIG. 16 is a block diagram of a network side device according to an embodiment of the present disclosure.

### DETAILED DESCRIPTION

The present disclosure will be described hereinafter in details in conjunction with illustrative embodiments, and examples of the disclosure are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure as specified in the appended claims.

The terms used in embodiments of the present disclosure are for illustrative purposes only, but do not intend to limit the present disclosure. Such a singular form as "one", "a/an" or "the/said" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of a same type from each other. For example, without departing from the scope of the present disclosure, first information may also be called as second information, and similarly second information may also be called as first information. Depending on the context, such a word as "if" may be construed as "when ...", "in the case that ..." or "in response to determining that ...".

The method and apparatus for information indication, device and storage medium according to the embodiments of the present disclosure will be described hereinafter in details with reference to the drawings.

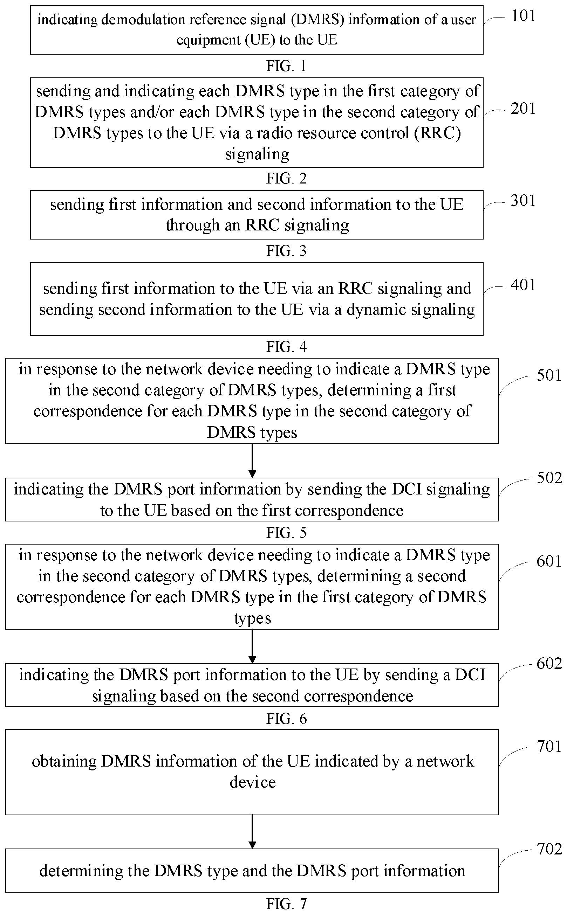

FIG. 1 is a flowchart of a method for information indication according to an embodiment of the present disclosure. The method is performed by a network device. As shown in FIG. 1, the method for information indication includes the following step at 151.

At 101, demodulation reference signal (DMRS) information of a user equipment (UE) is indicated to the UE.

It should be appreciated that, in an embodiment of the present disclosure, the UE may be a device for providing voice and/or data connectivity to a user. The UE may communicate with one or more core networks via a Radio Access Network (RAN). The UE may be an Internet of Things (IoT) terminal, e.g., a sensor device or a mobile phone (also called as cellular phone), or a computer having the IoT terminal, e.g., an immobile, portable, pocket-sized, handheld, built-in or vehicle-mounted device. For example, the UE may be a Station (STA), a subscriber unit, a subscriber station, a mobile station, a mobile, a remote station, an access point, a remote terminal, an access terminal, a user terminal or a user agent. The UE may also be a device for an unmanned aerial vehicle. The UE may also be a vehicle-mounted device, e.g., an electronic control unit having a wireless communication function, or a wireless terminal coupled to an external electronic control unit. Alternatively, the UE may also be a roadside device, e.g., a street lamp or a signal lamp having a wireless communication function, or any other roadside devices.

In an embodiment of the present disclosure, the DMRS information may include at least one of: a DMRS type, or DMRS port information corresponding to a data channel of the UE.

In an embodiment of the present disclosure, the above-mentioned DMRS type may include a first category of DMRS types and/or a second category of DMRS types. Specifically, the first category of DMRS types may be existing DMRS types, such as a DMRS type in Rel16/17. For example, the first category of DMRS types may include a DMRS type1 and a DMRS type2. The second category of DMRS types may be enhanced types of the first category of DMRS types from a perspective of supporting a number of ports (that is, a number of ports supported by the second category of DMRS types is more than a number of ports supported by the first category of DMRS types, such as the number of ports supported by the second category of DMRS types is twice the number of ports supported by the first category of DMRS types), such as DMRS types in Rel18. For example, the second category of DMRS types include a DMRS type3 and a DMRS type4, in which the DMRS type3 is an enhanced type of the DMRS type 1; and the DMRS type4 is an enhanced type of the DMRS type2.

Furthermore, the above-mentioned DMRS port information may include a DMRS port of a data channel allocated to the UE among ports supported by the DMRS type. The data channel may include a Physical Uplink Shared Channel (PUSCH) and a PDSCH (Physical Downlink Shared Channel).

To summarize, in the method for information indication according to the embodiments of the present disclosure, the network device may indicate to the UE DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 2 is a flowchart of a method for information indication according to another embodiment of the present disclosure, which is applied to a network device. As shown in FIG. 2, the method for information indication may include the following step at 201.

At 201, each DMRS type in the first category of DMRS types and/or each DMRS type in the second category of DMRS types are sent and indicated to the UE via a radio resource control (RRC) signaling.

In a possible implementation, the network device may send and indicate each DMRS type in the first category of DMRS types and each DMRS type in the second category of DMRS types to the UE via the RRC signaling. In another possible implementation, the network device may send and indicate each DMRS type in the first category of DMRS types and each DMRS type in the second category of DMRS types to the UE through different signalings, respectively. For example, each DMRS type in the first category of DMRS types may be indicated by one RRC signaling, and each DMRS type in the second category of DMRS types may be indicated by another RRC signaling. In yet another possible implementation, the network device may indicate each DMRS type in the second category of DMRS types to the UE via the RRC signaling.

The introduction of each DMRS type in the first category of DMRS types and each DMRS type in the second category of DMRS types may be referred to the description of the above embodiment, which will not be repeated here.

Furthermore, in an embodiment of the present disclosure, corresponding indication information is newly added for each DMRS type (such as the DMRS type3, the DMRS type4) in the second category of DMRS types. For example, indication information 1 can be used to indicate the DMRS type3, and indication information 2 can be used to indicate the DMRS type4. At the same time, since there is corresponding indication information for each DMRS type in the existing first category of DMRS types, such as indication information 3 corresponding to the DMRS type1, and indication information 4 corresponding to the DMRS type2, it is possible to include different indication information in the RRC signaling to indicate each DMRS type in the first category of DMRS types or each DMRS type in the second category of DMRS types. For example, when the RRC signaling includes indication information 2, the DMRS type 4 in the second category of DMRS types is indicated.

In addition, in an embodiment of the present disclosure, the RRC signaling may include a dmrs-type signaling for indicating the first category of DMRS types and/or the second category of DMRS types.

To summarize, in the method for information indication method according to the embodiments of the present disclosure, the network device may indicate to the UE, DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 3 is a flowchart of a method for information indication according to an embodiment of the present disclosure, which is applied to a network device. As shown in FIG. 3, the information indication method may include the following step at 301.

At 301, first information and second information are sent to the UE via the RRC signaling.

The first information is representation information corresponding to the DMRS type, which is used to represent the DMRS type, such as representing the DMRS type1 and the DMRS type2, and the second information is used to indicate whether a DMRS type represented by the first information belongs to an unenhanced DMRS type (i.e., the first category of DMRS types) or an enhanced DMRS type (i.e., the second category of DMRS types).

In a possible implementation, the first information and the second information may be sent to the UE via the RRC signaling. The first information and the second information may also be sent to the UE via other signaling, which is not limited in this embodiment of the present disclosure. The following description is made by taking the RRC signaling as an example. Those skilled in the art mat understand that in this exemplary description, the RRC signaling can be replaced by any appropriate signaling.

In the embodiments of the present disclosure, the first category of DMRS types may include the DMRS type 1 and the DMRS type2, and the second category of DMRS types may include the DMRS type3 and the DMRS type4. The DMRS type3 may be an enhancement of the DMRS type1, and DMRS type4 may be an enhancement of the DMRS type2. The first information and the second information may be used together for indication, that is, one piece of information is used to indicate whether it is DMRS type1 or DMRS type2, and the other piece of information may be used to indicate whether it is enhanced. In this way, it may be determined which one of the DMRS type1, DMRS type2, DMRS type3, and DMRS type4 via the first information and the second information.

Furthermore, the second information may be an identifier A to indicate whether the DMRS type represented by the first information belongs to unenhanced DMRS types (i.e., the first category of DMRS types) or enhanced DMRS types (i.e., the second category of DMRS types). Specifically, the identifier A may include F bits, where F is a positive integer. When the identifier Ais a first indication (such as a first numerical value), it means that the DMRS type represented by the first information belongs to enhanced DMRS types (i.e., the second category of DMRS types). When the identifier A is a second indication (such as a second numerical value), it means that the DMRS type represented by the first information belongs to unenhanced DMRS types (i.e., the first category of DMRS types).

For example, in an embodiment of the present disclosure, assuming that the identifier A is 1 bit, the first numerical value may be "1" and the second numerical value may be "0".

Based on the above content, in an embodiment of the present disclosure, the way of indicating each DMRS type in the first category of DMRS types or each DMRS type in the second category of DMRS types via the RRC signaling may include that,
in response to the second information being a first indication, it means that the DMRS type represented by the first information belongs to enhanced DMRS types (i.e., the second category of DMRS types); and at this time, a DMRS type indicated by the RRC signaling may be an enhanced DMRS type corresponding to the DMRS type represented by the first information; and
in response to the second information being a second indication, it means that the DMRS type represented by the first information belongs to unenhanced DMRS types (i.e., the first category of DMRS types); and at this time, the DMRS type indicated by the RRC signaling may be the DMRS type represented by the first information.

For example, assuming that the first information in the RRC signaling is representation information of the DMRS type1, and at this time, if the second information is set as the first indication, it can be determined that the DMRS type indicated by the RRC signaling is an enhanced DMRS type1 (such as DMRS type3) corresponding to the existing DMRS type1. If the second information is set as the second indication, it can be determined that the DMRS type indicated by the RRC signaling is the existing DMRS type1. Of course, the first category of DMRS types may include the DMRS type1 and the DMRS type2, and the second category of DMRS types may include the DMRS type3 and the DMRS type4, so the RRC signaling may indicate these four DMRS types in a variety of ways. For example, the second information may be two indication identifiers, and may indicate the four DMRS types jointly in combination with other indication ways (such as encoding ways or other indicators). Those skilled in the art will appreciate that there may be a plurality of ways to indicate these four DMRS types, which are not limited here.

To summarize, in the method for information indication according to the embodiments of the present disclosure, the network device may indicate to the UE, DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 4 is a flowchart of a method for information indication according to an embodiment of the present disclosure, which is applied to a network device. As shown in FIG. 4, the method for information indication may include the following step at 401.

At 401, first information is sent to the UE via an RRC signaling, and second information is sent to the UE via a dynamic signaling.

The first information is representation information corresponding to the DMRS type, which is used to represent the DMRS type, such as representing the DMRS type1 and the DMRS type2, and the second information is used to indicate whether a DMRS type represented by the first information belongs to an unenhanced DMRS type (i.e., the first category of DMRS types) or an enhanced DMRS type (i.e., the second category of DMRS types).

The relevant introduction about the first information and the second information can be referred to the description of the above embodiments, which will not be repeated here.

Furthermore, in an embodiment of the present disclosure, the above-mentioned dynamic signaling may be a medium access control-control element (MAC CE) signaling or a downlink control information (DCI) signaling.

In an embodiment of the present disclosure, the way of dynamically indicating each DMRS type in the first category of DMRS types or each DMRS type in the second category of DMRS types via the RRC signaling and the dynamic signaling may include at least one of following situations: in response to the second information sent by the dynamic signaling being a first indication, the DMRS type indicated by the first information in the RRC signaling may be an enhanced DMRS type corresponding to the DMRS type; and in response to the second information sent by the dynamic signaling being a second indication, the DMRS type indicated by the first information in the RRC signaling may be the DMRS type.

In the above embodiment, the DMRS type is indicated by the RRC signaling in combination with the dynamic signaling.

Of course, the first category of DMRS types may include the DMRS type1 and the DMRS type2, and the second category of DMRS types may include the DMRS type3 and the DMRS type4. Therefore, similar to the aforementioned embodiments, these four DMRS types may be indicated together via a combination of the RRC signaling and the dynamic signaling. For example, the second information may be two indication identifiers, and may indicate the four DMRS types jointly in combination with other indication ways (such as encoding ways or other indicators). Those skilled in the art will appreciate that there may be a plurality of ways to indicate these four DMRS types, which are not limited here.

To summarize, in the method for information indication according to the embodiments of the present disclosure, the network device may indicate to the UE, DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 5 is a flowchart of a method for information indication according to an embodiment of the present disclosure, which is applied to a network device. As shown in FIG. 5, the method for information indication may include the following steps at 501-502.

At 501, in response to a network device needing to indicate a DMRS type in the second category of DMRS types, a first correspondence for each DMRS type in the second category of DMRS types is determined.

In an embodiment of the present disclosure, the first correspondence may be a correspondence between a port (Antenna port) indication field value of a DCI signaling and the DMRS port information. Also, for the introduction of each DMRS type in the second category of DMRS types and DMRS port information, reference may be made to the description of the above embodiments, which will not be elaborated here.

Furthermore, in an embodiment of the present disclosure, for each DMRS type in the newly introduced second category of DMRS types, the first correspondence between the port indication field value of the DCI signaling and the DMRS port information is redesigned.

It should be noted that when the DMRS types are different or the symbol lengths of the DMRS types is different, the first correspondence may also be different. Table 1 shows the first correspondence when the DMRS type is dmrs-Type=1 (i.e., the DMRS type is the enhanced DMRS type corresponding to the DMRS type1, such as the DMRS type3) and maxLength=1 (i.e., the symbol length is of one symbol) in the second category of DMRS types.

**Table 1**

| One Codeword: Codeword 0 enabled, Codeword 1 disabled | | | Two Codewords: Codeword 0 enabled, Codeword 1 enabled | | |
|---|---|---|---|---|---|
| **Value** | Number of DMRS CDM group(s) without data | DMRS port(s) | Value | Number of DMRS CDM group(s) without data | **DMRS** port(s) |
| 0 | n | 0 | 0 | k | 0-4 |
| 1 | n | 1 | 1 | k | 0,1,2,3,4,6 |
| 2 | n | 0,1 | 2 | k | 0,1,2,3,4,5,6 |
| 3 | n | 0 | 3 | k | 0,1,2,3,4,5,6,7 |
| 4 | k | 1 | 4-31 | reserved | reserved |
| 5 | k | 2 | | | |
| 6 | k | 3 | | | |
| 7 | k | 0,1 | | | |
| 8 | k | 2,3 | | | |
| 9 | k | 0-2 | | | |
| 10 | k | 0-3 | | | |
| 11 | k | 0,2 | | | |
| 12 | k | 0 | | | |
| 13 | k | 1 | | | |
| 14 | k | 2 | | | |
| 15 | k | 3 | | | |
| 16 | k | 4 | | | |
| 17 | k | 5 | | | |
| 18 | k | 6 | | | |
| 19 | k | 7 | | | |
| 20 | k | 0,1 | | | |
| 21 | k | 2,3 | | | |
| 22 | k | 4,5 | | | |
| 23 | k | 6,7 | | | |
| 24 | k | 0,4 | | | |
| 25 | k | 2,6 | | | |
| 26 | k | 0,1,4 | | | |
| 27 | k | 2,3,6 | | | |
| 28 | k | 0,1,4,5 | | | |
| 29 | k | 2,3,6,7 | | | |
| 30 | k | 0,2,4,6 | | | |
| 31 | Reserved | Reserved | | | |

It may be understood that each element in the above Table 1 exists independently. These elements are exemplarily listed in the same table, but it does not mean that all elements in the table must exist at the same time as shown in the table. The value of each element is independent of the value of any other element in Table 1. Therefore, those skilled in the art may understand that the value of each element in Table 1 is an independent embodiment.

For the second category of DMRS types, when dmrs-Type=1 and maxLength=1, the number of ports supported is 8, exemplarily ports 0-7, and the DMRS port information indicated by the network device is specifically M ports selected from the 8 supported ports, where M is a positive integer less than or equal to 8. As shown in Table 1, when Codeword 0 is enabled and Codeword 1 is disabled, the DMRS ports allocated to the data channel of each UE include at most 4 ports (that is, at most 4 ports can be selected from the supported 8 ports); and when Codeword 0 is enabled and Codeword 1 is enabled, the number of ports included in the DMRS port information corresponding to each UE should belong to [4,8] (that is, at least 4 ports can be randomly selected from the supported 8 ports, and at most 4 ports can be randomly selected).

Furthermore, the value in the above Table 1 represents a port indication field value of the DCI signaling; DMRS port(s) represents the DMRS port information. As shown in Table 1, for 'dmrs-Type=1, maxLength=1' in the second category of DMRS types, when One Codeword is used, if the port indication field value of the DCI signaling is 9, the DMRS port information indicated by the DCI signaling is DMRS ports 0-2, that is, DMRS ports 0-2 among ports supported by "dmrs-Type=1" are allocated to the data channel for the UE. If the port indication field value of the DCI signaling is 30, the DMRS port information indicated by the DCI signaling is DMRS ports 0, 2, 4, 6, that is, DMRS ports 0, 2, 4, 6 among ports supported by "dmrs-Type=1" are allocated to the data channel for the UE.

It should be noted that the 'Number of DMRS CDM group(s) without data' in the above Table 1 specifically refers to a number of code division multiplexing (CDM) group(s) not used for data transmission among CDM groups. The value of 'Number of DMRS CDM group(s)without data' is related to a specific DMRS type.

In addition, it should be noted that, in an embodiment of the present disclosure, when the port indication field of the DCI signaling indicates DMRS port information of each DMRS type in the second category of DMRS types, since a number of ports supported by each DMRS type in the second category of DMRS types is greater than a number of ports supported by each DMRS type in the first category of DMRS types, a number of optional port combinations corresponding to each DMRS type in the second category of DMRS types may increase, That is, the number of optional combinations of the DMRS port information of each DMRS type in the second category of DMRS types may increase (as shown in the above Table 1, a number of combinations under One Codeword has increased to 30). At this time, a number of bits occupied by the port indication field of the DCI signaling should be increased so that the number of values of the port indication field of the DCI signaling may match the number of optional port combinations corresponding to each DMRS type in the second category of DMRS types. Table 2 is a correspondence table between each DMRS type in the second category of DMRS types and the number of bits occupied by the port indication field of the DCI signaling in the embodiments of the present disclosure.

**Table 2**

| DMRS type | maxLength | Number of bits |
|---|---|---|
| Pattern1 corresponding to the DMRS type3 | 1 | 5 |
| Pattern2 corresponding to the DMRS type3 | 2 | 6 |
| Pattern3 corresponding to the DMRS type4 | 1 | 6 |
| Pattern4 corresponding to the DMRS type4 | 2 | 7 |

It may be understood that each element in the above Table 2 exists independently. These elements are exemplarily listed in the same table, but it does not mean that all elements in the table must exist at the same time as shown in the table. The value of each element is independent of the value of any other element in Table 2. Therefore, those skilled in the art may understand that the value of each element in Table 2 is an independent embodiment.

As shown in Table 2, in response to the network device needing to indicate an single-symbol DMRS type3, a number of bits occupied by a port indication field of a DCI signaling is 5; in response to the network device needing to indicate a double-symbol DMRS type3, the number of bits occupied by the port indication field of the DCI signaling is 6; in response to the network device needing to indicate an single-symbol DMRS type4, the number of bits occupied by the port indication field of the DCI signaling is 6; in response to the network device needing to indicate a double-symbol DMRS type4, the number of bits occupied by the port indication field of the DCI signaling is 7.

At 502, the DMRS port information is indicated by sending the DCI signaling to the UE based on the first correspondence.

Specifically, the DMRS port information that needs to be indicated may be determined, a port indication field value corresponding to the DMRS port information that needs to be indicated may be determined based on the first correspondence, and the port indication field value may be sent to the UE via the port indication field of the DCI signaling.

For example, for the scenario of "dmrs-Type=1, maxLength=1, One Codeword under the second category of DMRS types", assuming that the DMRS port information that the network device needs to indicate is: ports 0, 1, 4, 5, then it may be determined that the port indication field value should be 28 by querying the first correspondence shown in the above Table 1, the port indication field value of the DCI signaling may be set as 28, and the DCI signaling may be sent to the UE.

To summarize, in the method for information indication according to the embodiments of the present disclosure, the network device may indicate to the UE, DMRS information of the UE, in which the DMRS information includes at least one of: the DMRS type or the DMRS port information corresponding to the UE. The DMRS type includes at least one of the first category of DMRS types or the second category of DMRS types. The second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 6 is a flowchart of a method for information indication according to an embodiment of the present disclosure, which is applied to a network device. As shown in FIG. 6, the method for information indication may include the following steps at 601-602.

At 601, in response to the network device needing to indicate a DMRS type in the second category of DMRS types, a second correspondence for each DMRS type in the first category of DMRS types is determined.

In an embodiment of the present disclosure, the second correspondence is a correspondence between a port indication field value of a DCI signaling and the DMRS port information. The second correspondence is stored in the network device when the network device leaves the factory, or the second correspondence is determined according to the 3GPP communication standard. Also, the introduction of each DMRS type in the first category of DMRS types and the DMRS port information may be referred to the description of the above embodiment, which will not be repeated here.

The second correspondence is a correspondence between the port indication field value of the DCI signaling in each existing DMRS type (or called each DMRS type in the first category of DMRS types) and the DMRS port information. Furthermore, in an embodiment of the present disclosure, when the DMRS types are different or symbol lengths of the DMRS types are different, the second correspondence may also be different. Table 3 shows a second correspondence when the DMRS type is dmrs-Type=1 (i.e., the existing DMRS type1 in the related art) and maxLength=1 (i.e., the symbol length is of one symbol) in the first category of DMRS types.

**Table 3**

| One Codeword: Codeword 0 enabled, Codeword 1 disabled | | |
|---|---|---|
| **Value** | Number of DMRS CDM group(s) without data | DMRS port(s) |
| 0 | m | 0 |
| 1 | m | 1 |
| 2 | m | 0,1 |
| 3 | f | 0 |
| 4 | f | 1 |
| 5 | f | 2 |
| 6 | f | 3 |
| 7 | f | 0,1 |
| 8 | f | 2,3 |
| 9 | f | 0-2 |
| 10 | f | 0-3 |
| 11 | f | 0,2 |
| 12-15 | Reserved | Reserved |

It may be understood that each element in the above Table 3 exists independently. These elements are exemplarily listed in the same table, but it does not mean that all elements in the table must exist at the same time as shown in the table. The value of each element is independent of the value of any other element in Table 3. Therefore, those skilled in the art may understand that the value of each element in Table 3 is an independent embodiment.

For the first category of DMRS types, when dmrs-Type=1 and maxLength=1, the number of ports supported is 4, exemplarily ports 0-4; and the DMRS port information indicated by the network device is specifically M ports selected from the 4 supported ports, where M is a positive integer less than or equal to 4.

Furthermore, the value in the above Table 3 represents a port indication field value of the DCI signaling; DMRS port(s) represents the DMRS port information. As shown in Table 3, for 'dmrs-Type = 1, maxLength = 1' in the first category of DMRS types, if the port indication field value of the DCI signaling is 9, the DMRS port information indicated by the DCI signaling is DMRS ports 0-2, that is, DMRS ports 0-2 among ports supported by "dmrs-Type = 1" are allocated to the data channel for the UE.

The 'Number of DMRS CDM group(s) without data' in the above Table 3 specifically refers to a number of CDM group(s) not used for data transmission among CDM groups. The value of 'Number of DMRS CDM group(s)without data' is related to a specific DMRS type.

At 602, the DMRS port information is indicated to the UE by sending the DCI signaling to the UE based on the second correspondence.

In an embodiment of the present disclosure, the second correspondence for the first category of DMRS types is reused to indicate the DMRS port information of the second category of DMRS types.

Specifically, in an embodiment of the present disclosure, a method for reusing the second correspondence for the first category of DMRS types to indicate the DMRS port information of the second category of DMRS types may include:
in response to DMRS port information that the network device needs to indicate including a plurality of ports, the plurality of ports included in the DMRS port information should belong to a same transmission reception point (TRP), and an identifier B is included in the DCI signaling, in which the identifier B indicates that the DMRS port information indicated by the DCI signaling is port information of a first TRP or port information of a second TRP.

The identifier B may include F bits, where F is a positive integer. When the identifier B is a first value (such as 0), it means that the DMRS port information indicated by the DCI signaling is the port information of the first TRP. When the identifier B is a second value (such as 1), it means that the DMRS port information indicated by the DCI signaling is the port information of the second TRP.

It should be noted that the above-mentioned first TRP and second TRP are TRPs corresponding to the ports supported by the DMRS type indicated by the network device. Specifically, when a total number of ports supported by the DMRS type is N, such as the ports supported by the DMRS type are ports 0 ~ (N-1), at this time, the first N/2 ports among the ports supported by the DMRS type correspond to the first TRP, and the last N/2 ports correspond to the second TRP. For example, the ports 0 ~ (N/2-1) corresponds to the first TRP, and ports N/2 ~ (N-1) corresponds to the second TRP.

Further, in an embodiment of the present disclosure, a method for indicating the DMRS port information to the UE by sending the DCI signaling to the UE based on the second correspondence may mainly include:
in response to the identifier indicating that the DMRS port information is the port information of the first TRP, an identity (ID) of a DMRS port actually indicated by the DMRS port information is an ID of a DMRS port included in the DMRS port information; and
in response to the identifier indicating that the DMRS port information is the port information of the second TRP, the ID of the DMRS port actually indicated by the DMRS port information is a sum of the ID of the DMRS port included in the DMRS port information and a preset value, in which the preset value is N/2, and N is a total number of ports supported by the DMRS type in the second category of DMRS types indicated by the network device.

It should be noted that when the second correspondence in the related art in the 3GPP standard is reused to indicate the DMRS port information of the enhanced second category of DMRS types, the second correspondence should be a correspondence for an unenhanced DMRS type corresponding to an enhanced DMRS type to be indicated. For example, when the DMRS port information of DMRS type3 (i.e., the enhanced DMRS type1) is to be indicated, the DMRS port information of DMRS type3(i.e., the enhanced DMRS type1) is indicated by using the second correspondence for the unenhanced DMRS type1 corresponding to DMRS type3.

The following is explained by taking "reusing the second correspondence for the unenhanced DMRS type 1 to indicate the DMRS port information of the enhanced DMRS type 1" as an example. The same design concept may be adopted in other cases, which will not be repeated here.

The unenhanced DMRS type1 may support 4 ports in the case of single-symbol, ports ID#0-3 respectively, second correspondence of which is shown in Table 3. The enhanced DMRS type1 (i.e., DMRS type3) may support 8 ports (i.e., N=8) in the case of single-symbol, ports ID#0-7 respectively, and ports ID#0-3 among the 8 ports supported by the enhanced DMRS type1 is the port information corresponding to the first TRP, and ports ID#4-7 among the 8 ports supported by the enhanced DMRS type1 (i.e., DMRS type3) is the port information corresponding to the second TRP.

Based on this, in combination with Table 3, when the second correspondence for the unenhanced DMRS type1 is used to indicate the DMRS port information of the enhanced DMRS type1, if the port indication field value of the DCI signaling sent by the network device to the UE is 8, it means that port IDs corresponding to the indication field value should be: port ID#2 and port ID#3. At this time, when the identifier B in the DCI signaling is 0, it means that the DMRS port information actually indicated by the DCI signaling is the port information of the first TRP. At this time, IDs of the DMRS ports actually indicated by the DMRS port information is IDs of the DMRS ports included in the DMRS port information, that is, port ID#2 and port ID#3. When the identifier B in the DCI signaling is 1, it means that the DMRS port information actually indicated by the DCI signaling is the port information of the second TRP. At this time, IDs of the DMRS ports actually indicated by the DMRS port information is a sum of IDs of the DMRS ports included in the DMRS port information and a preset value, in which the preset value is N/2=8/2=4. Then, the IDs of the DMRS port actually indicated by the DMRS port information should be: port ID#2 + 4 = ID#6, and port ID#3 + 4 = ID#7. That is, the preset value may be an offset value of the port.

In addition, it should be noted that, in an embodiment of the present disclosure, only the DMRS port information of the DMRS type in the second category of DMRS types is indicated by reusing "the second correspondence between the port indication field value of the DCI signaling for the first category of DMRS types and the DMRS port information", while other parameters of the first category of DMRS types (such as Number of DMRS CDM group(s)without data) may not be directly reused in the second category of DMRS types, but need to be adjusted before being reused in the second category of DMRS types.

To summarize, in the method for information indication according to the embodiments of the present disclosure, the network device may indicate to the UE DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 7 is a flowchart of a method for information indication according to an embodiment of the present disclosure, which is applied to a UE. As shown in FIG. 7, the method for information indication may include the following steps at 701-702.

At 701, DMRS information of the UE indicated by the network device is obtained.

In an embodiment of the present disclosure, the DMRS information may include at least one of: a DMRS type or DMRS port information corresponding to the UE. The DMRS type includes a first category of DMRS types and/or a second category of DMRS types, and the second category of DMRS types are enhanced types of the first category of DMRS types from a perspective of supporting a number of ports. The DMRS port information indicates a DMRS port of a data channel allocated to the UE among ports supported by the DMRS type.

In an embodiment of the present disclosure, the first category of DMRS types may include a DMRS type 1 and a DMRS type2.

The second category of DMRS types may include a DMRS type3 and a DMRS type4, in which the DMRS type3 is an enhanced type of the DMRS type1; and the DMRS type4 is an enhanced type of the DMRS type2.

At 702, the DMRS type and the DMRS port information are determined.

The detailed description of steps 701-702 can be referred to the description of the above embodiment, which will not be repeated herein.

To summarize, in the method for information indication method according to the embodiments of the present disclosure, the network device may indicate to the UE, DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

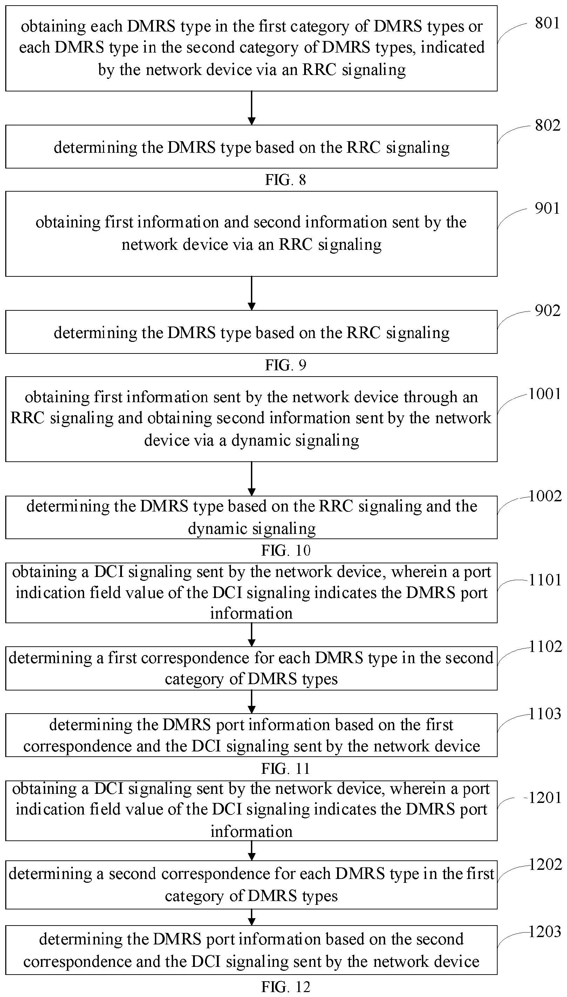

FIG. 8 is a flowchart of a method for information indication according to an embodiment of the present disclosure, which is applied to a UE. As shown in FIG. 8, the information indication method may include the following steps at 801-802.

At 801, each DMRS type in the first category of DMRS types and/or each DMRS type in the second category of DMRS types are obtained, which are indicated by the network device via an RRC signaling.

At 802, the DMRS type is determined based on the RRC signaling.

The detailed description of steps 801-802 can be referred to the description of the above embodiment, which will not be repeated herein.

To summarize, in the method for information indication method according to the embodiments of the present disclosure, the network device may indicate to the UE, DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 9 is a flowchart of a method for information indication according to an embodiment of the present disclosure, which is applied to a UE. As shown in FIG. 9, the method for information indication may include the following steps at 901-902.

At 901, first information and second information sent by a network device via an RRC signaling are obtained.

In an embodiment of the present disclosure, the first information is representation information corresponding to the DMRS type, and the second information indicates whether a DMRS type represented by the first information belongs to unenhanced DMRS types (i.e., the first category of DMRS types) or enhanced DMRS types (i.e., the second category of DMRS types);

In an embodiment of the present disclosure, in response to the second information being a first indication, it means that the DMRS type represented by the first information belongs to enhanced DMRS types (i.e., the second category of DMRS types) ; and at this time, a DMRS type indicated by the RRC signaling may be an enhanced DMRS type corresponding to the DMRS type represented by the first information; and in response to the second information being a second indication, it means that the DMRS type represented by the first information belongs to unenhanced DMRS types (i.e., the first category of DMRS types); and at this time, the DMRS type indicated by the RRC signaling may be the DMRS type represented by the first information.

At 902, the DMRS type is determined based on the RRC signaling.

The detailed description of steps 901-902 can be referred to the description of the above embodiment, which will not be repeated herein.

To summarize, in the method for information indication according to the embodiments of the present disclosure, the network device may indicate to the UE, DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 10 is a flowchart of a method for information indication according to an embodiment of the present disclosure, which is applied to a UE. As shown in FIG. 10, the method for information indication may include the following steps at 1001-1002.

At 1001, first information sent by a network device via an RRC signaling is obtained and second information sent by the network device via a dynamic signaling is obtained.

In an embodiment of the present disclosure, the first information is representation information of a DMRS type, and the second information indicates whether a DMRS type indicated represented the first information belongs to unenhanced DMRS types (i.e., the first category of DMRS types) or enhanced DMRS types (i.e., the second category of DMRS types);
In an embodiment of the present disclosure, in response to the second information sent by the dynamic signaling being a first indication, the DMRS type indicated by the first information in the RRC signaling may be an enhanced DMRS type corresponding to the DMRS type; and in response to the second information sent by the dynamic signaling being a second indication, the DMRS type indicated by the first information in the RRC signaling may be the DMRS type.

At 1002, the DMRS type is determined based on the RRC signaling and the dynamic signaling.

The detailed description of steps 1001-1002 can be referred to the description of the above embodiment, which will not be repeated herein.

To summarize, in the method for information indication according to the embodiments of the present disclosure, the network device may indicate to the UE, DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 11 is a flowchart of a method for information indication according to an embodiment of the present disclosure, which is applied to a UE. As shown in FIG. 11, the method for information indication may include the following steps at 1101-1103.

At 1101, a DCI signaling sent by the network device is obtained, in which a port indication field value of the DCI signaling indicates the DMRS port information.

At 1102, a first correspondence for each DMRS type in the second category of DMRS types is determined, in which the first correspondence is a correspondence between a port indication field value of the DCI signaling and the DMRS port information.

In an embodiment of the present disclosure, the first correspondence may be stored in the UE when the UE leaves the factory.

At 1103, the DMRS port information is determined based on the first correspondence and the DCI signaling sent by the network device.

The detailed description of steps 1101-1103 can be referred to the description of the above embodiment, which will not be repeated herein.

To summarize, in the method for information indication according to the embodiments of the present disclosure, the network device may indicate to the UE, DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

FIG. 12 is a flowchart of a method for information indication according to an embodiment of the present disclosure, which is applied to a UE. As shown in FIG. 12, the method for information indication may include the following steps at 1201-1203.

At 1201, a DCI signaling sent by the network device is obtained, in which a port indication field value of the DCI signaling indicates the DMRS port information.

At 1202, a second correspondence for each DMRS type in the first category of DMRS types is determined, in which the second correspondence is a correspondence between a port indication field value of the DCI signaling and the DMRS port information.

In an embodiment of the present disclosure, the second correspondence may be stored in the UE when the UE leaves the factory.

At 1203, the DMRS port information is determined based on the second correspondence and the DCI signaling sent by the network device.

In an embodiment of the present disclosure, in response to the DMRS port information indicated by the DCI signaling including a plurality of ports, the plurality of ports included in the DMRS port information should belong to a same TRP, and the DCI signaling includes an identifier, and the identifier indicates that the DMRS port information indicated by the DCI signaling is port information of a first TRP or port information of a second TRP, in which the first TRP and the second TRP are TRPs corresponding to the ports supported by the DMRS type indicated by the network device.

determining the DMRS port information based on the second correspondence and the DCI signaling sent by the network device includes: in response to the identifier indicating that the DMRS port information is the port information of the first TRP, determining that an ID of a DMRS port actually indicated by the DMRS port information is an ID of a DMRS port included in the DMRS port information; in response to the identifier indicating that the DMRS port information is the port information of the second TRP, determining that the ID of the DMRS port actually indicated by the DMRS port information is a sum of the ID of the DMRS port included in the DMRS port information and a preset value, in which the preset value is N/2, and N is a total number of ports supported by the DMRS type in the second category of DMRS types indicated by the network device.

The detailed description of steps 1201-1203 can be referred to the description of the above embodiment, which will not be repeated here.

To summarize, in the method for information indication according to the embodiments of the present disclosure, the network device may indicate to the UE DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

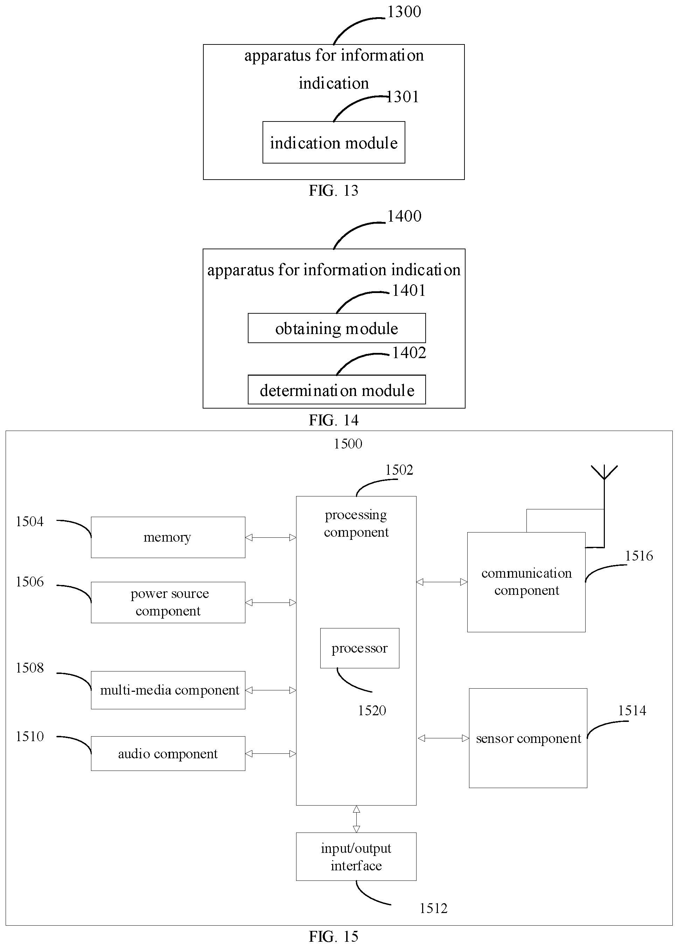

FIG. 13 is a structural diagram of an apparatus for information indication according to an embodiment of the present disclosure. As shown in FIG. 13, the apparatus may include an indication module.

The indication module is configured to indicate DMRS information of a UE to the UE, in which the DMRS information includes at least one of: a DMRS type, or DMRS port information corresponding to the UE. The DMRS type includes a first category of DMRS types and a second category of DMRS types. The second category of DMRS types are enhanced types of the first category of DMRS types from a perspective of supporting a number of ports. The DMRS port information indicates a DMRS port of a data channel allocated to the UE among ports supported by the DMRS type.

To summarize, in the apparatus for information indication according to the embodiments of the present disclosure, the network device may indicate to the UE DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

Optionally, in an embodiment of the present disclosure, the first category of DMRS types may include a DMRS type1 and a DMRS type2. The second category of DMRS types may include a DMRS type3 and a DMRS type4, in which the DMRS type3 is an enhanced type of the DMRS type1; and the DMRS type4 is an enhanced type of the DMRS type2.

Optionally, in an embodiment of the present disclosure, the indication module is further configured to: send and indicate each DMRS type in the first category of DMRS types and each DMRS type in the second category of DMRS types to the UE via an RRC signaling.

Optionally, in an embodiment of the present disclosure, the indication module is further configured to: send first information and second information to the UE via an RRC signaling. The first information is representation information corresponding to the DMRS type, and the second information indicates whether a DMRS type represented by the first information belongs to the first category of DMRS types or the second category of DMRS types;
in response to the second information indicating that the DMRS type represented by the first information belongs to the second category of DMRS types, a DMRS type indicated by the RRC signaling is an enhanced DMRS type corresponding to the DMRS type represented by the first information; in response to the second information indicating that the DMRS type represented by the first information belongs to the first category of DMRS types, the DMRS type indicated by the RRC signaling is the DMRS type represented by the first information.

Optionally, in an embodiment of the present disclosure, the indication module is further configured to: send first information to the UE via an RRC signaling and send second information to the UE through a dynamic signaling, in which the first information is representation information corresponding to the DMRS type, and the second information indicates whether a DMRS type represented by the first information belongs to the first category of DMRS types or the second category of DMRS types;
in response to the second information indicating that the DMRS type represented by the first information belongs to the second category of DMRS types, a DMRS type indicated by the RRC signaling is an enhanced DMRS type corresponding to the DMRS type represented by the first information; in response to the second information indicating that the DMRS type represented by the first information belongs to the first category of DMRS types, the DMRS type indicated by the RRC signaling is the DMRS type represented by the first information.

Optionally, in an embodiment of the present disclosure, in response to the network device needing to indicate a DMRS type in the second category of DMRS types, the indication module is further configured to: determine a first correspondence for each DMRS type in the second category of DMRS types, in which the first correspondence is a correspondence between a port indication field value of a DCI signaling and the DMRS port information; and indicate the DMRS port information by sending the DCI signaling to the UE based on the first correspondence.

Optionally, in an embodiment of the present disclosure, the DMRS information further includes a symbol length of the DMRS type, and the symbol length includes one symbol or two symbols.

Optionally, in an embodiment of the present disclosure, in response to the network device needing to indicate an single-symbol DMRS type3, a number of bits occupied by a port indication field of a DCI signaling is 5; in response to the network device needing to indicate a double-symbol DMRS type3, the number of bits occupied by the port indication field of the DCI signaling is 6; in response to the network device needing to indicate an single-symbol DMRS type4, the number of bits occupied by the port indication field of the DCI signaling is 6; and in response to the network device needing to indicate a double-symbol DMRS type4, the number of bits occupied by the port indication field of the DCI signaling is 7.

Optionally, in an embodiment of the present disclosure, in response to the network device needing to indicate a DMRS type in the second category of DMRS types, the indication module is further configured to: determine a second correspondence for each DMRS type in the first category of DMRS types, in which the second correspondence is a correspondence between a port indication field value and the DMRS port information; and indicating the DMRS port information to the UE by sending a DCI signaling based on the second correspondence.

Optionally, in an embodiment of the present disclosure, in response to the DMRS port information indicated by the DCI signaling including a plurality of ports, the plurality of ports included in the DMRS port information should belong to a same TRP, and the DCI signaling includes an identifier, and the identifier indicates that the DMRS port information indicated by the DCI signaling is port information of a first TRP or port information of a second TRP, in which the first TRP and the second TRP are TRPs corresponding to the ports supported by the DMRS mapping type indicated by the network device;
in response to the identifier indicating that the DMRS port information is the port information of the first TRP, an ID of a DMRS port actually indicated by the DMRS port information is an ID of a DMRS port included in the DMRS port information; in response to the identifier indicating that the DMRS port information is the port information of the second TRP, the ID of the DMRS port actually indicated by the DMRS port information is a sum of the ID of the DMRS port included in the DMRS port information and a preset value, in which the preset value is N/2, and N is a total number of ports supported by the DMRS type in the second category of DMRS types indicated by the network device.

FIG. 14 is a structural diagram of an apparatus for information indication according to an embodiment of the present disclosure. As shown in FIG. 14, the apparatus may include an obtaining module and a determination module.

The obtaining module is configured to obtain DMRS information of the UE indicated by a network device, in which the DMRS information includes at least one of: a DMRS type, or DMRS port information corresponding to the UE. The DMRS type includes a first category of DMRS types and a second category of DMRS types. The second category of DMRS types are enhanced types of the first category of DMRS types from a perspective of supporting a number of ports. The DMRS port information indicates a DMRS port of a data channel allocated to the UE among ports supported by the DMRS type.

The determination module is configured to determine the DMRS type and DMRS port information.

To summarize, in the apparatus for information indication according to the embodiments of the present disclosure, the network device may indicate to the UE DMRS information of the UE, in which the DMRS information includes at least one of: the DMRS type or the DMRS port information corresponding to the UE. The DMRS type includes the first category of DMRS types and/or the second category of DMRS types, and the second category of DMRS types are enhanced types of the first category of DMRS types from a perspective of supporting a number of ports. The DMRS port information indicates the DMRS port of the data channel allocated to the UE among ports supported by the DMRS type. It can be seen that the indication method in the embodiments of the present disclosure may indicate the second category of DMRS types (i.e., the enhanced DMRS types) and DMRS port information of the second category of DMRS types, which may support multi-TRP CJT and promote the deployment of the multi-TRP CJT.

Optionally, in an embodiment of the present disclosure, the first category of DMRS types may include a DMRS type 1 and a DMRS type2. The second category of DMRS types may include a DMRS type3 and a DMRS type4, in which the DMRS type3 is an enhanced type of the DMRS type 1; and the DMRS type4 is an enhanced type of the DMRS type2.

Optionally, in an embodiment of the present disclosure, the obtaining module is further configured to: obtain each DMRS type in the first category of DMRS types or each DMRS type in the second category of DMRS types, indicated by the network device via an RRC signaling.

Optionally, in an embodiment of the present disclosure, the obtaining module is further configured to: obtain first information and second information sent by the network device via an RRC signaling, in which the first information is representation information corresponding to the DMRS type, and the second information indicates whether a DMRS type represented by the first information belongs to the first category of DMRS types or the second category of DMRS types;
in response to the second information indicating that the DMRS type represented by the first information belongs to the second category of DMRS types, a DMRS type indicated by the RRC signaling is an enhanced DMRS type corresponding to the DMRS type represented by the first information; in response to the second information indicating that the DMRS type represented by the first information belongs to the first category of DMRS types, the DMRS type indicated by the RRC signaling is the DMRS type represented by the first information.

Optionally, in an embodiment of the present disclosure, the obtaining module is further configured to: obtain first information sent by the network device via an RRC signaling and obtain second information sent by the network device via a dynamic signaling, in which the first information is representation information corresponding to the DMRS type, and the second information indicates whether a DMRS type represented by the first information belongs to the first category of DMRS types or the second category of DMRS types;
in response to the second information indicating that the DMRS type represented by the first information belongs to the second category of DMRS types, a DMRS type indicated by the RRC signaling is an enhanced DMRS type corresponding to the DMRS type represented by the first information; in response to the second information indicating that the DMRS type represented by the first information belongs to the first category of DMRS types, the DMRS type indicated by the RRC signaling is the DMRS type represented by the first information.

Optionally, in an embodiment of the present disclosure, the obtaining module is further configured to: obtain a DCI signaling sent by the network device, in which a port indication field value of the DCI signaling indicates the DMRS port information.

Optionally, in an embodiment of the present disclosure, in response to the network device indicating a DMRS type in the second category of DMRS types, the determination module is further configured to: determine a first correspondence for each DMRS type in the second category of DMRS types, in which the first correspondence is a correspondence between a port indication field value of a DCI signaling and the DMRS port information; and determine the DMRS port information based on the first correspondence and the DCI signaling sent by the network device.

Optionally, in an embodiment of the present disclosure, the DMRS information further includes a symbol length of the DMRS type, and the symbol length includes one symbol or two symbols.

Optionally, in an embodiment of the present disclosure, in response to the network device needing to indicate an single-symbol DMRS type3, a number of bits occupied by a port indication field of a DCI signaling is 5; in response to the network device needing to indicate a double-symbol DMRS type3, the number of bits occupied by the port indication field of the DCI signaling is 6; in response to the network device needing to indicate an single-symbol DMRS type4, the number of bits occupied by the port indication field of the DCI signaling is 6; and in response to the network device needing to indicate a double-symbol DMRS type4, the number of bits occupied by the port indication field of the DCI signaling is 7.

Optionally, in an embodiment of the present disclosure, in response to the network device indicating a DMRS type in the second category of DMRS types,, the determination module is further configured to: determine a second correspondence for each DMRS type in the first category of DMRS types, in which the second correspondence is a correspondence between a port indication field value and the DMRS port information; and determine the DMRS port information based on the second correspondence and the DCI signaling sent by the network device.
Optionally, in an embodiment of the present disclosure, in response to the DMRS port information indicated by the DCI signaling including a plurality of ports, the plurality of ports included in the DMRS port information should belong to a same TRP, and the DCI signaling includes an identifier, and the identifier indicates that the DMRS port information indicated by the DCI signaling is port information of a first TRP or port information of a second TRP, in which the first TRP and the second TRP are TRPs corresponding to the ports supported by the DMRS mapping type indicated by the network device;

The determination module is further configured to: determine, in response to the identifier indicating that the DMRS port information is the port information of the first TRP, an ID of a DMRS port actually indicated by the DMRS port information is an ID of a DMRS port included in the DMRS port information; and determine, in response to the identifier indicating that the DMRS port information is the port information of the second TRP, the ID of the DMRS port actually indicated by the DMRS port information is a sum of the ID of the DMRS port included in the DMRS port information and a preset value, in which the preset value is N/2, and N is a total number of ports supported by the DMRS type in the second category of DMRS types indicated by the network device.

FIG. 15 is a block diagram of a UE 1500 according to an embodiment of the present disclosure. For example, the UE 1500 is a mobile phone, a computer, a digital broadcasting terminal device, a message transceiver device, a game console, a flat-panel device, medical equipment, fitness equipment, or a personal digital assistant.

As shown in FIG. 15, the UE 1500 includes at least one component selected from the group consisting of a processing component 1502, a memory 1504, a power source component 1506, a multi-media component 1508, an audio component 1510, an Input/Output (I/O) interface 1512, a sensor component 1513, and a communication component 1516.

Generally, the processing component 1502 controls an entire operation of the UE 1500, e.g., operations associated with display, phone call, data communication, camera operation and recording operation. The processing component 1502 includes at least one processor 1520 to execute an instruction, so as to implement all of, or a part of, the steps of the above-mentioned method. In addition, the processing component 1502 includes at least one module for the interaction between the processing component 1502 and the other component. For example, the processing component 1502 includes a multi-media module for the interaction between the multi-media component 1508 and the processing component 1502.

The memory 1504 is configured to store therein various types of data to support the operation of the UE 1500. Examples of such data include instructions for any application or method operated on the UE 1500, contact data, phonebook data, messages, pictures, video, etc. The memory 1504 may be implemented in the form of any type of volatile or non-volatile memory devices, or their combination, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source component 1506 provides power to various components of the UE 1500. The power source component 1506 may include a power management system, at least one power source, and any other assemblies associated with the generation, management and distribution of power in the UE 1500.

The multi-media component 1508 includes a screen for providing an output interface between the UE 1500 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media component 1508 includes a front-facing camera and/or a rear-facing camera. When the UE 1500 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio component 1510 is configured to output and/or input audio signals. For example, the audio component 1510 includes a microphone (MIC) configured to receive an external audio signal when the UE 1500 is in an operating mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but not limited to, a home button, a volume button, a starting button, and a locking button.

The sensor component 1513 includes at least one sensor to provide status assessments about various aspects of the UE 1500. For example, the sensor component 1513 may detect an open/closed status of the UE 1500, a relative positioning of components, e.g., the display and the keypad, of the UE 1500, a change in a position of the UE 1500 or an component of the UE 1500, a presence or absence of user contact with the UE 1500, an orientation or an acceleration/deceleration of the UE 1500, and a change in a temperature of the UE 1500. The sensor component 1513 may include a proximity sensor configured to detect the presence of nearby objects without any physical contact. The sensor component 1513 may also include a light sensor, such as a Complementary Metal Oxide Semiconductor (CMOS) or Charge-Coupled Device (CCD) image sensor, for use in imaging applications. In some embodiments, the sensor component 1513 may also include an accelerometer sensor, a gyroscope sensor, a magnetic sensor, a pressure sensor, or a temperature sensor.

The communication component 1516 is configured to facilitate wired or wireless communication between the UE 1500 and other devices. The UE 1500 may access a wireless network based on a communication standard, such as Wi-Fi, 2G or 3G, or their combination. In an exemplary embodiment of the present disclosure, the communication component 1516 receives a broadcast signal or broadcast associated information from an external broadcast management system via a broadcast channel. In an exemplary embodiment of the present disclosure, the communication component 1516 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In the exemplary embodiment of the present disclosure, the UE 1500 may be implemented with at least one Application Specific Integrated Circuit (ASICs), Digital Signal Processor (DSP), Digital Signal Processing Device (DSPD), Programmable Logic Device (PLD), Field Programmable Gate Array (FPGA), controller, micro-controller, microprocessor or other electronic components, for performing the above-mentioned method.

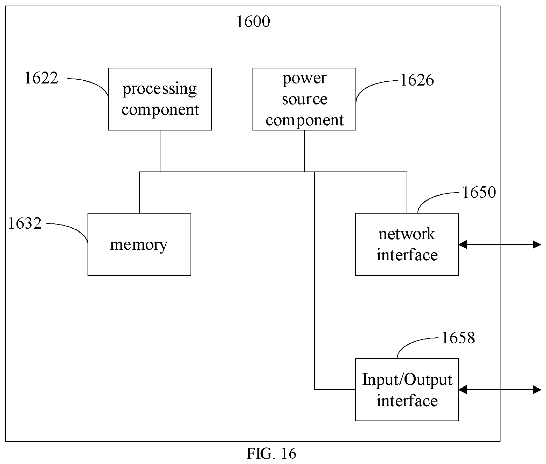

FIG. 16 is a block diagram of a network side device 1600 according to an embodiment of the present disclosure. For example, the network side device 1600 is provided as a network side device. As shown in FIG. 16, the network side device 1600 includes a processing component 1622, which further includes at least one processor and memory resources represented by a memory 1632 for storing therein instructions to be executed by the processing component 1622, e.g., applications. The applications stored in the memory 1632 may include one or more modules each corresponding to one group of instructions. In addition, the processing component 1622 is configured to execute the instructions, so as to implement any method for the network side device, e.g., the method in FIG. 1.

The network side device 1600 further includes a power source component 1626 configured to performed power management over the network side device 1600, a wired or wireless network interface 1650 configured to couple the network side device 1600 to a network, and an Input/Output (I/O) interface 1658. The network side device 1600 may be based on an operating system stored in the memory 1632, e.g., Windows Server TM, Mac OS XTM, Unix TM, Linux TM, Free BSDTM, or the like.

In the above-mentioned embodiments of the present disclosure, the methods have been described from the perspectives of the network side device and the UE. In order to achieve various functions in the embodiments of the present disclosure, each of the network side device and the UE includes a hardware structure and a software module, i.e., the functions are achieved in the form of the hardware structure, the software module, or their combination. A certain function in these functions is executed by the hardware structure, the software module, or their combination.

In the above-mentioned embodiments of the present disclosure, the methods have been described from the perspectives of the network side device and the UE. In order to achieve various functions in the embodiments of the present disclosure, each of the network side device and the UE includes a hardware structure and a software module, i.e., the functions are achieved in the form of the hardware structure, the software module, or their combination. A certain function in these functions is executed by the hardware structure, the software module, or their combination.

The present disclosure further provides in some embodiments a communication device, which includes a transceiver module and a processing module. The transceiver module includes a transmission module and/or a reception module, the transmission module is configured to achieve a transmission function, the reception module is configured to achieve a reception function, and the transceiver module is configured to achieve the transmission function and/or the reception function.

The communication apparatus may be a terminal device (e.g., the terminal device mentioned hereinabove), or an apparatus in the terminal device, an apparatus capable of being used in combination with the terminal device. Alternatively, the communication apparatus may be a network device, an apparatus in the network device, or an apparatus capable of being used in combination with the network device.

The present disclosure further provides in some embodiments another communication device. The communication device may be a network device, a terminal device (e.g., the terminal device mentioned hereinabove), or a chip, a chip system or a processor which supports the network device to achieve the above-mentioned method, or a chip, a chip system or a processor which supports the terminal device to achieve the above-mentioned method. The device is used to achieve the above-mentioned method, which will not be particularly defined herein.

The communication device may include one or more processors. The processor may be a general-purpose processor or special-purpose processor, e.g., a baseband processor or a Central Processing Unit (CPU). The baseband processor is configured to process a communication protocol as well as communication data, and the CPU is configured to control the communication device (e.g., a network side device, a baseband chip, a terminal device, a terminal device chip, a Distributed Unit (DU) or a Centralized Unit (CU)), execute a computer program, and process data in the computer program.

Optionally, the communication device further includes one or more memories storing a computer program. The computer program is executed by the processor, so that the communication device executes the above-mentioned method. Optionally, the memory further stores therein data. The communication device is arranged independent of, or integrated with, the memory.

Optionally, the communication device further includes a transceiver and an antenna. The transceiver is also called as a transceiver unit, a transceiver machine or a transceiver circuit, and it is configured to achieve a transmission function and a reception function. The transceiver includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication device further includes one or more interface circuits. The interface circuit is configured to receive a code instruction and transmit it to the processor. The processor executes the code instruction, so that the communication device implements the above-mentioned method.

The communication device is a terminal device (e.g., the terminal device mentioned hereinabove), and the processor is configured to execute the method in FIGs. 1 to 4.

The communication device is a network device, and the transceiver is configured to execute the method in FIGS. 5 to 7.

In an implementation, the processor may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

In an implementation, the processor stores therein a computer program, and the computer program is executed by the processor, so that the communication device implements the above-mentioned method. The computer program may be programmed in the processor, and in this case, the processor may be implemented through hardware.

In an implementation, the communication device includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device mentioned hereinabove may be a network device or a terminal device (e.g., the terminal device mentioned hereinabove), but the scope of the communication device is not limited thereto. In addition, a structure of the communication device will not be particularly defined herein. The communication device may be an independent device, or a part of a large device. For example, the communication device may be:
(1) an independent IC, chip, chip system or chip sub-system;
(2) a set of one or more ICs (optionally, the IC set also includes a memory member for storing therein data and a computer program;
(3) an ASIC, e.g., a Modem;
(4) a module capable of being embedded into the other device;
(5) a receiver, a terminal device, a smart terminal device, a cellular phone, a wireless device, a handheld device, a mobile unit, a vehicle-mounted device, a network device, a cloud device, an artificial intelligence device, etc.; or
(6) the other device.

When the communication device is a chip or a chip system, the chip includes a processor and an interface. There may exist one or more processors, and one or more interfaces.

Optionally, the chip further includes a memory for storing therein necessary computer programs and data.

It should be appreciated that, various illustrative logical blocks and steps listed in the embodiments of the present disclosure may be implemented through electronic hardware, computer software, or their combination. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a system for determining a Sidelink duration. The system includes the communication device serving as a terminal device (e.g., the first terminal device mentioned hereinabove) and the communication device serving as a network device, or includes the communication device serving as a terminal device (e.g., the first terminal device mentioned hereinabove) and the communication device serving as a network device.

The present disclosure further provides in some embodiments a readable storage medium storing therein an instruction. The instruction is executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or their combination. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of a same kind, the words "first", "second", "third", "A", "B", "C" and "D" are used to differentiate these technical features, without indicating any sequence or sizes of the technical features.

Other embodiments of the present disclosure will be apparent to those skilled in the art from consideration of the specification and practice of the present disclosure disclosed here. This application is intended to cover any variations, uses, or adaptations of the disclosure following the general principles of the disclosure and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope of the disclosure. It is intended that the scope of the present disclosure only be limited by the appended claims.

## Claims

1. A method for information indication, performed by a network device, the method comprising:
indicating demodulation reference signal (DMRS) information of a user equipment (UE) to the UE, wherein the DMRS information comprises at least one of:
a DMRS type, wherein the DMRS type comprises a first category of DMRS types and/or a second category of DMRS types, the second category of DMRS types are enhanced types of the first category of DMRS types from a perspective of supporting a number of ports; or
DMRS port information corresponding to the UE, wherein the DMRS port information indicates a DMRS port of a data channel allocated to the UE among ports supported by the DMRS type.

2. The method according to claim 1, wherein
the first category of DMRS types comprise a DMRS type1 and a DMRS type2;
the second category of DMRS types comprise a DMRS type3 and a DMRS type4, wherein the DMRS type3 is an enhanced type of the DMRS type1; and the DMRS type4 is an enhanced type of the DMRS type2.

3. The method according to claim 1 or 2, wherein indicating the DMRS type to the UE comprises:
sending and indicating each DMRS type in the first category of DMRS types and/or each DMRS type in the second category of DMRS types to the UE via a radio resource control (RRC) signaling.

4. The method according to claim 1 or 2, wherein indicating the DMRS type to the UE comprises:
sending first information and second information to the UE via a radio resource control (RRC) signaling, wherein the first information is representation information corresponding to the DMRS type, and the second information indicates whether a DMRS type represented by the first information belongs to the first category of DMRS types or the second category of DMRS types; and
wherein in response to the second information indicating that the DMRS type represented by the first information belongs to the second category of DMRS types, a DMRS type indicated by the RRC signaling is an enhanced DMRS type corresponding to the DMRS type represented by the first information;
in response to the second information indicating that the DMRS type represented by the first information belongs to the first category of DMRS types, the DMRS type indicated by the RRC signaling is the DMRS type represented by the first information.

5. The method according to claim 1 or 2, wherein indicating the DMRS type to the UE comprises:
sending first information to the UE via a radio resource control (RRC) signaling and sending second information to the UE via a dynamic signaling, wherein the first information is representation information corresponding to the DMRS type, and the second information indicates whether a DMRS type represented by the first information belongs to the first category of DMRS types or the second category of DMRS types; and
wherein in response to the second information indicating that the DMRS type represented by the first information belongs to the second category of DMRS types, a DMRS type indicated by the RRC signaling is an enhanced DMRS type corresponding to the DMRS type represented by the first information;
in response to the second information indicating that the DMRS type represented by the first information belongs to the first category of DMRS types, the DMRS type indicated by the RRC signaling is the DMRS type represented by the first information.

6. The method according to claim 1 or 2, wherein in response to the network device needing to indicate a DMRS type in the second category of DMRS types, indicating the DMRS port information to the UE comprises:
determining a first correspondence for each DMRS type in the second category of DMRS types, wherein the first correspondence is a correspondence between a port indication field value of a downlink control information (DCI) signaling and the DMRS port information; and
indicating the DMRS port information by sending the DCI signaling to the UE based on the first correspondence.

7. The method according to any one of claims 2-6, wherein the DMRS information further comprises a symbol length of the DMRS type, and the symbol length comprises one symbol or two symbols.

8. The method according to claim 7, wherein in response to the network device needing to indicate an single-symbol DMRS type3, a number of bits occupied by a port indication field of a DCI signaling is 5;
in response to the network device needing to indicate a double-symbol DMRS type3, the number of bits occupied by the port indication field of the DCI signaling is 6;
in response to the network device needing to indicate an single-symbol DMRS type4, the number of bits occupied by the port indication field of the DCI signaling is 6; and
in response to the network device needing to indicate a double-symbol DMRS type4, the number of bits occupied by the port indication field of the DCI signaling is 7.

9. The method according to claim 1 or 2, wherein in response to the network device needing to indicate a DMRS type in the second category of DMRS types, indicating the DMRS port information to the UE comprises:
determining a second correspondence for each DMRS type in the first category of DMRS types, wherein the second correspondence is a correspondence between a port indication field value and the DMRS port information; and
indicating the DMRS port information to the UE by sending a downlink control information (DCI) signaling based on the second correspondence.

10. The method according to claim 9, wherein in response to the DMRS port information indicated by the DCI signaling comprising a plurality of ports, the plurality of ports comprised in the DMRS port information should belong to a same transmission reception point (TRP), and the DCI signaling comprises an identifier, and the identifier indicates that the DMRS port information indicated by the DCI signaling is port information of a first TRP or port information of a second TRP; wherein the first TRP and the second TRP are TRPs corresponding to the ports supported by the DMRS type indicated by the network device;
wherein in response to the identifier indicating that the DMRS port information is the port information of the first TRP, an identity (ID) of a DMRS port actually indicated by the DMRS port information is an ID of a DMRS port comprised in the DMRS port information;
in response to the identifier indicating that the DMRS port information is the port information of the second TRP, the ID of the DMRS port actually indicated by the DMRS port information is a sum of the ID of the DMRS port comprised in the DMRS port information and a preset value, wherein the preset value is N/2, and N is a total number of ports supported by the DMRS type in the second category of DMRS types indicated by the network device.

11. A method for information indication, performed by a user equipment (UE), the method comprising:
obtaining demodulation reference signal (DMRS) information of the UE indicated by a network device, wherein the DMRS information comprises at least one of:
a DMRS type, wherein the DMRS type comprises a first category of DMRS types and/or a second category of DMRS types, the second category of DMRS types are enhanced types of the first category of DMRS types from a perspective of supporting a number of ports; or
DMRS port information corresponding to the UE, wherein the DMRS port information indicates a DMRS port of a data channel allocated to the UE among ports supported by the DMRS type; and
determining the DMRS type and the DMRS port information.

12. The method according to claim 11, wherein
the first category of DMRS types comprise a DMRS type1 and a DMRS type2;
the second category of DMRS types comprise a DMRS type3 and a DMRS type4, wherein the DMRS type3 is an enhanced type of the DMRStype1; and the DMRS type4 is an enhanced type of the DMRS type2.

13. The method according to claim 11 or 12, wherein obtaining the DMRS type indicated by the network device comprises:
obtaining each DMRS type in the first category of DMRS types or each DMRS type in the second category of DMRS types, indicated by the network device via a radio resource control (RRC) signaling.

14. The method according to claim 11 or 12, wherein obtaining the DMRS type indicated by the network device comprises:
obtaining first information and second information sent by the network device via a radio resource control (RRC) signaling, wherein the first information is representation information corresponding to the DMRS type, and the second information indicates whether a DMRS type represented by the first information belongs to the first category of DMRS types or the second category of DMRS types;
wherein in response to the second information indicating that the DMRS type represented by the first information belongs to the second category of DMRS types, a DMRS type indicated by the RRC signaling is an enhanced DMRS type corresponding to the DMRS type represented by the first information;
in response to the second information indicating that the DMRS type represented by the first information belongs to the first category of DMRS types, the DMRS type indicated by the RRC signaling is the DMRS type represented by the first information.

15. The method according to claim 11 or 12, wherein obtaining the DMRS type indicated by the network device comprises:
obtaining first information sent by the network device via a radio resource control (RRC) signaling and obtaining second information sent by the network device via a dynamic signaling, wherein the first information is representation information corresponding to the DMRS type, and the second information indicates whether a DMRS type represented by the first information belongs to the first category of DMRS types or the second category of DMRS types; and
wherein in response to the second information indicating that the DMRS type represented by the first information belongs to the second category of DMRS types, a DMRS type indicated by the RRC signaling is an enhanced DMRS type corresponding to the DMRS type represented by the first information;
in response to the second information indicating that the DMRS type represented by the first information belongs to the first category of DMRS types, the DMRS type indicated by the RRC signaling is the DMRS type represented by the first information.

16. The method according to claim 11 or 12, wherein obtaining the DMRS port information indicated by the network device comprises:
obtaining a downlink control information (DCI) signaling sent by the network device, wherein a port indication field value of the DCI signaling indicates the DMRS port information.

17. The method according to claim 16, wherein in response to the network device indicating a DMRS type in the second category of DMRS types, determining the DMRS port information comprises:
determining a first correspondence for each DMRS type in the second category of DMRS types, wherein the first correspondence is a correspondence between a port indication field value of the DCI signaling and the DMRS port information; and
determining the DMRS port information based on the first correspondence and the DCI signaling sent by the network device.

18. The method according to any one of claims 12-17, wherein the DMRS information further comprises a symbol length of the DMRS type, and the symbol length comprises one symbol or two symbols.

19. The method according to claim 18, wherein in response to the network device needing to indicate an single-symbol DMRS type3, a number of bits occupied by a port indication field of a DCI signaling is 5;
in response to the network device needing to indicate a double-symbol DMRS type3, the number of bits occupied by the port indication field of the DCI signaling is 6;
in response to the network device needing to indicate an single-symbol DMRS type4, the number of bits occupied by the port indication field of the DCI signaling is 6; and
in response to the network device needing to indicate a double-symbol DMRS type4, the number of bits occupied by the port indication field of the DCI signaling is 7.

20. The method according to claim 16, wherein in response to the network device indicating a DMRS type in the second category of DMRS types, determining the DMRS port information comprises:
determining a second correspondence for each DMRS type in the first category of DMRS types, wherein the second correspondence is a correspondence between a port indication field value and the DMRS port information; and
determining the DMRS port information based on the second correspondence and the DCI signaling sent by the network device.

21. The method according to claim 20, wherein in response to the DMRS port information indicated by the DCI signaling comprising a plurality of ports, the plurality of ports comprised in the DMRS port information should belong to a same transmission reception point (TRP), and the DCI signaling comprises an identifier, and the identifier indicates that the DMRS port information indicated by the DCI signaling is port information of a first TRP or port information of a second TRP; wherein the first TRP and the second TRP are TRPs corresponding to the ports supported by the DMRS type indicated by the network device;
wherein determining the DMRS port information based on the second correspondence and the DCI signaling sent by the network device comprises:
in response to the identifier indicating that the DMRS port information is the port information of the first TRP, determining that an ID of a DMRS port actually indicated by the DMRS port information is an ID of a DMRS port comprised in the DMRS port information;
in response to the identifier indicating that the DMRS port information is the port information of the second TRP, determining that the identifier of the DMRS port actually indicated by the DMRS port information is a sum of the identifier of the DMRS port comprised in the DMRS port information and a preset value, wherein the preset value is N/2, and N is a total number of ports supported by the DMRS type in the second category of DMRS types indicated by the network device.

22. An apparatus for information indication, comprising:
an indication module configured to indicate demodulation reference signal (DMRS) information of a user equipment (UE) to the UE, wherein the DMRS information comprises at least one of:
a DMRS type, wherein the DMRS type comprises a first category of DMRS types and/or a second category of DMRS types, the second category of DMRS types are enhanced types of the first category of DMRS types from a perspective of supporting a number of ports; or
DMRS port information corresponding to the UE, wherein the DMRS port information indicates a DMRS port of a data channel allocated to the UE among ports supported by the DMRS type.

23. An apparatus for information indication, comprising:
an obtaining module, configured to obtain demodulation reference signal (DMRS) information of the UE indicated by a network device, wherein the DMRS information comprises at least one of:
a DMRS type, wherein the DMRS type comprises a first category of DMRS types and/or a second category of DMRS types, the second category of DMRS types are enhanced types of the first category of DMRS types from a perspective of supporting a number of ports; or
DMRS port information corresponding to the UE, wherein the DMRS port information indicates a DMRS port of a data channel allocated to the UE among ports supported by the DMRS type; and
a determination module, configured to determine the DMRS type and the DMRS port information.

24. A communication device, comprising: a processor, and a memory storing a computer program; wherein when the computer program is executed by the processor, the device is caused to perform the method according to any one of claims 1 to 10.

25. A communication device, comprising: a processor, and a memory storing a computer program; wherein when the computer program is executed by the processor, the device is caused to perform the method according to any one of claims 11 to 21.

26. A communication device, comprising: a processor, and an interface circuit,
wherein the interface circuit is configured to receive code instructions and transmit the code instructions to the processor,
the processor is configured to run the code instructions, so that the device is caused to execute the method according to any one of claims 1 to 10.

27. A communication device, comprising: a processor, and an interface circuit,
wherein the interface circuit is configured to receive code instructions and transmit the code instructions to the processor,
the processor is configured to run the code instructions, so that the device is caused to execute the method according to any one of claims 11 to 21.

28. A computer-readable storage medium for storing instructions which, when executed, the method according to any one of claims 1 to 10 is implemented.

29. A computer-readable storage medium for storing instructions which, when executed, the method according to any one of claims 11 to 21 is implemented.
